# EUROPEAN PATENT APPLICATION

(11) **EP 4 715 093 A1**
(43) Date of publication of application: **25.03.2026**
(21) Application number: 24201248.2
(22) Date of filing: 19.09.2024
(51) Int. Cl.: C25B 9/23, C25B 9/60, C25B 9/77

(54) **SEALING DEVICE WITH A COMPRESSION LIMITER**

(71) Applicant: AVL List GmbH, 8020 Graz (AT); AVL Fuel Cell Canada Inc, Burnaby, British Columbia V5A 4W2 (CA)
(72) Inventor: Lee, Stephen, Burnaby, V5S 4C1 (CA); Hsieh, Yvonne, Burnaby, V5C1W5 (CA)
(74) Representative: Gamper, Bettina

(57) **Abstract**

The present invention relates to a sealing device (100) for sealing a membrane electrode assembly (210) of an electrolyser cell (200) against one or more bipolar plates (220) of the electrolyser cell (200). The sealing device (100) comprises a seal (110), which extends in a width direction (101) between two opposite seal surface sides (111, 112) for sealing against respective seal counter-surfaces (211, 221) of the electrolyser cell (200) and further comprises a seal lateral side (113), which is provided laterally of the seal surface sides (111, 112). The sealing device (100) comprises further at least one limiter (120) for limiting a compression of the seal (110) in the width direction (101) by engaging two opposite limiter surface sides (121, 122) of the limiter (120) with the seal counter-surfaces (211, 221). The limiter (120) comprises further a limiter lateral side (123), which is provided laterally of the limiter surface sides (121, 122). At least a part of the limiter lateral side (123) is mechanically connected to at least a part of the seal lateral side (113).

## Description

The invention relates to a sealing device for sealing an electrolyser cell having a solid polymer electrolyte, wherein the sealing device comprises a seal and a compression limiter. The invention relates further to an electrolyser cell with such a sealing device.

Hydrogen is prescribed an important role in the transformation process towards emission-free energy generation and energy storage. Hydrogen can be produced in electrolysers through electrolysis of water; a process, where water is split into hydrogen and oxygen by using electricity. Amongst available electrolyser technology, proton exchange membrane (PEM) electrolysers and anion exchange membrane (AEM) electrolysers are considered viable options for producing hydrogen at an industrial scale. Both, PEM and AEM electrolysers use semipermeable membranes that are made from a solid polymer and are designed to conduct ions, such as cations (often protons, H+) or anions (often hydroxide ions, OH-), while separating process substances on either side of the membrane and electrically isolating catalyst layers.

Typically, a single electrolyser cell consists of a membrane electrode assembly (MEA) that is arranged between two porous transport layers (PTL) or one PTL and one gas diffusion layer (GDL). A PTL can be configured as a metallic PTL or as a traditional carbon GDL. Bipolar plates (BPP) are provided at each PTL or GDL for distributing the process and reaction substances to and from the MEA as well as for providing electrical contact. To increase production, several individual electrolyser cells are stacked in series of each other. The individual cells are separated from each other by shared BPPs, which provide electrical contact between neighbouring electrolyser cells. Such assembly is called an electrolyser cell stack.

The equally stack-like assembly of components of an electrolyser cell poses various technical challenges for ensuring a reliable and persistent separation of the process and reaction substances. The process conditions required for the electrolysis of water place further demands on sealing the individual components of an electrolyser cell against each other. For example, in operation, the components are exposed to substantial pressures (e.g. up to 100 bar) and, in some cases, corrosive substances.

Typically, sealing between a BPP and the MEA of an electrolyser cell is achieved by providing a static seal between the two components and compressing the electrolyser cell with bolts that apply pressure from two opposite sides.

With such design, it is commonly seen that the MEA and the seals exhibit compression set (creep) over time, whereby compression set, or creep can be understood as a time-dependent and irreversible deformation of a material under a constant mechanical load. This is true also if anode and cathode side are PTLs. As the thickness of the MEA or the seals decreases, also the overall compression of the electrolyser cell decreases. This results in an increase of contact resistances between the now thinner GDL of the electrolyser cell, which will lead to a decrease in the performance of the electrolyser cell. To counter these effects, usually additional springs are employed to provide constant compression as the electrolyser cell thickness decreases over time. However, with this design, the MEA and the seals will continue to experience compression set, possibly beyond the expansion reach of the springs and thus, the contact resistance between the components can increase again. Further springs could be added, but these will increase the total volume of the electrolyser cell or compress the seals beyond their compression limits. Additionally, as the MEA and seals experience compression set, there will be a point where the pores of the PTLs and GDLs will be crushed, leading to limitations in the transport of reactant and process substances. This will negatively impact the performance of the electrolyser cell. Furthermore, as the MEA thickness decreases while compression forces increase, the provided seals could be exposed to more force than they are designed for and thereby, may exceed their mechanical breaking point.

In addition, as mentioned above, the electrolysis of water typically requires that the components are exposed to substantial pressures (e.g. up to 100 bar), which may be significantly higher than those pressures existing in a fuel cell (e.g. up to 10 bar). This is, because, during operation, there is a high internal pressure from either the reactant water and/or the pressure created by the production of hydrogen pushing the BPPs away from the MEA. Consequently, electrolyser cells may be designed to be under high compression forces to counteract the high internal pressure existing in the electrolyser cells during operation. Thus, some electrolyser cells are already designed in a way to compress the seals beyond the required amount of compression during operation. However, when the electrolyser cell is not in operation, the internal pressure reduces but the compression forces on the electrolyser cell remain at the same high level as during operation. Accordingly, the compression on the MEA and seals during non-operation is much higher than during operation, which can accelerate the occurrence of compression set and/or increase the risk of damage of the electrolyser cell.

It is generally known to use limiter structures for limiting compression set of seals, which are separately provided from the seal. A separate provision of these components leads to complex assembly processes. Specifically, it is not possible to accurately position the seal relative to the limiter structure. This can lead to an undesired creation of bending stresses in the electrolyser cell, for instance when the seal is accidentally placed in a primary path of the compression force. In general, the limiting function of the known separate limiter structures depend on a very accurate position of such structures relate to the sealing members. Thus, a high accuracy is necessary during assembling of the components. Furthermore, a compression of the seal cannot be reliably limited, for instance, if the mating surfaces are not within flatness tolerance or the seal comprises an unsymmetrical cross-sectional profile.

In another approach of limiting seal compression, rigid structures are encapsulated within the seal. However, such structures are insufficiently capable of protecting the seal of over-compression since the rigid structure cannot come in direct contact with the pressurizing mating surfaces. Thus, even when the rigid structure transmits forces between the mating surfaces, the seal is always exposed to the compression forces as the forces must pass first through the seal material.

It is thus an object of the present invention to overcome the disadvantages described above at least partly. In particular, it is an object of the invention to provide a sealing device for an electrolyser cell which limits the compression of a seal to minimize compression set in the electrolyser cell.

Aforesaid problem is solved by a sealing device with the features of claim 1 and by an electrolyser cell with the features of claim 12.

Further advantages and features of the invention are evident from the dependent claims, the description, and the drawings. Features and details described in connection with the sealing device of the invention naturally also apply to the electrolyser cell of the invention and vice versa, so that for disclosure, reference is or can be made mutually to the individual aspects of the invention.

A first aspect of the invention relates to a sealing device for sealing a membrane electrode assembly of an electrolyser cell against at least one bipolar plate of the electrolyser cell. The sealing device comprises a seal. The seal extends in a width direction between two opposite seal surface sides for sealing against respective seal counter-surfaces of the electrolyser cell. The seal further comprises a seal lateral side, which is provided laterally of the seal surface sides. The sealing device further comprises at least one limiter for limiting a compression of the seal in the width direction. The limiter comprises two opposite limiter surface sides for engaging with the seal counter-surfaces. The limiter further comprises a limiter lateral side, which is provided laterally of the limiter surface sides. At least a part of the limiter lateral side is mechanically connected to at least a part of the seal lateral side.

Therein, the term *"sealing device"* may be understood as a device or component that prevents or limits movement of fluids between different spaces. Specifically, the present sealing device is configured to seal a MEA of an electrolyser cell against at least one bipolar plate of the electrolyser cell. Thus, the sealing device may prevent or limit fluid substances that are used in electrolyser cells, such as hydrogen, oxygen, alkaline solutions and/or water, to move from an anode side to a cathode side of the electrolyser cell or vice versa. Alternatively, or additionally, the sealing device may prevent or limit leakage of said fluid substances from one electrode side to the outside of the electrolyser cell.

The term *"electrolyser cell"* may be understood as an electrochemical device to convert electricity and water into hydrogen and oxygen. For instance, the electrolyser cell may be a PEM electrolyser cell, which comprises a solid polymer electrolyte to conduct ions from an anode to a cathode while electrically insulating said electrodes. A further option is an embodiment using an AEM (anion exchange membrane) electrolyser cell as an alternative to the PEM electrolyser cell.

As mentioned, the sealing device comprises a seal. Therein, the term "*seal*" may be understood as a deformable element that closes gaps between the mating surfaces of two adjoining components. The seal extends in a width direction between two opposite seal surface sides for sealing against the respective seal counter-surfaces. Therein, the term *"seal surface side"* may be understood as the side of the seal that comprises a surface for entering in sealing contact with a seal counter-surface. The *"seal counter-surface"* may be also understood as a mating surface, which may belong to one of the components of an electrolyser cell, such as the MEA or the BPP. The sealing device may be a static seal. The sealing device may be adhered to mating components or removable from the electrolyser cell.

As further mentioned, the sealing device also comprises at least one limiter for limiting a compression of the seal in the width direction. Therein, the term *"limiter"* may be understood as a structure or component of the sealing device that is less compressible in the width direction than the seal and/or the MEA. The limiter may be capable of preventing compression of the seal beyond a certain distance by resisting compression forces applied to its two limiter surface sides. The limiter may be arranged with the two limiter surface sides facing in opposite directions parallel to the width direction. The limiter width may determine the maximum compression set, which the seal is allowed. The term *"limiter lateral side"* may be understood as a part or the whole surface of the limiter which does not belong to the limiter surface sides.

As further mentioned, at least a part of the limiter lateral side is mechanically connected to at least a part of the seal lateral side. The limiter may be lateral within or lateral outside of the seal.

The term *"mechanically connected"* may be understood as a physical connection between two parts. Preferably, it may be understood as a physical connection between two parts that may be produced and exist independently of each other. For example, the mechanical connection may be provided as a form-fit connection (e.g. overmolding and/or edge bonding), a force-fit connection, and/or a friction-fit connection. Alternatively or additionally, said mechanical connection may be an adhesive bond between the seal and the limiter. Preferably, said mechanical connection may be reversible and/or non-destructively reversible. Preferably, said mechanical connection may be a not-integral or a not-monolithic connection. Preferably, the limiter may be arranged relative to the seal such that the seal can expand or compress independently from the limiter.

In other words, the sealing device of the invention provides for a unitary structure that, through the limiter, physically integrates a compression limitation functionality in a seal for an electrolyser cell. Since the limiter and the seal are connected to each other laterally of the seal surface sides as well as the limiter surface sides, it can be ensured that their respective primary surface sides of engagement are directly exposed to the respective seal counter-surfaces of the electrolyser cell. Thereby, the seal can be prevented from compressing beyond a specified distance. Further, the mechanical connection between the seal and the limiter allows to decouple any compression strain on the limiter from the seal. Through the above configurations, the limiter and the seal can fulfil their respective functionality effectively and independently of each other. Thereby, the seal can be effectively protected from over-compression. This is of particular advantage for electrolyser cells, where in case of non-operation the compression forces are higher than during operation. The limiter can bear the forces corresponding to the required over-compression of the seal. Also, exact alignment between the limiter and the seal can be ensured. Further, the production of the sealing device and the assembly process of electrolyser cells can be simplified.

According to a preferred embodiment, a limiter width extending from one limiter surface side to the other limiter surface side may be smaller than a seal width extending from one seal surface side to the other seal surface side.

This ensures that the seal always works. Because the limiter is thinner than the seal, the seal can be sufficiently compressed to perform its function.

According to a further preferred embodiment, the at least one limiter may be arranged with respect to the seal to extend in the width direction between the seal surface sides. Therein, a distance in the width direction between the limiter surface side and the seal surface side on one side of the sealing device in the width direction may be the same or different as a distance between the other limiter surface side and the other seal surface side on the opposite side of the sealing device.

Thereby, the relative position of the limiter between the seal surface sides can be set and thus, the compression distances on either side of the seal can be set individually.

For equal compression on either side of the seal in the width direction, the limiter may be arranged equidistant between the seal surface sides.

According to a preferred embodiment, the at least one limiter may be made of a different material than the seal. Preferably, the at least one limiter may be made of a material less compressible than the seal material. For instance, the seal may comprise an elastomer and the at least one limiter may comprise a non-conductive solid. For instance, the limiter may be made of carbon, plastic or a ceramic material.

By using different materials for the seal and the limiter, each of said elements can be provided from a material most suitable for their respective functionality. This means that the seal and the limiter can be separate structures from each other but can be combined to a unitary structure through the mechanical connection.

According to a further preferred embodiment, the at least one limiter may comprise a locking element for locking the limiter relatively to the seal. Preferably, the locking element may be provided at the limiter lateral side. The locking element may be configured for locking the limiter to the seal by engaging the locking element with a corresponding counter-locking element of the seal. The counter-locking element may be provided at the seal lateral side. Preferably, the locking element may be provided separate from or integral with the limiter. The connection between the locking element and the counter-locking element may be reversible or non-destructively reversible.

Thereby, the limiter and the seal can be fixed to each other through a force-fitting or form-fitting connection. In particular, the relative orientation and position of the limiter to the seal can be accurately set and ensured. Moreover, the locking and counter-locking elements allow to use a wide variety of materials for the sealing device.

According to a preferred embodiment, the seal may comprise an opening, which may extend between the two opposite seal surface sides. Therein, the opening may form at least part of the seal lateral side. Preferably, the at least one limiter may be provided in the opening with the limiter lateral side facing or contacting the seal lateral side. More preferred, the at least one limiter and the opening may have complementary cross-sectional profiles for establishing a friction-fit connection. The seal lateral sides may be edge bonded with the limiter lateral side features. Therein, the limiter may be arranged movable with respect to the seal.

Thereby, production of the sealing device can be simplified and the limiter can be arranged self-centring inside the seal.

According to a further preferred embodiment, the sealing device may comprise several limiters. Preferably, the several limiters may be provided within the seal at equal intervals in a longitudinal direction transversely to the width direction.

Due to equally spacing the limiters, the compression can be limited homogeneously.

According to a preferred embodiment, the whole limiter lateral side may be mechanically connected to at least a part of the seal lateral side.

This allows to connect the limiter to the seal so that only the limiter surface sides are not mechanically connected to the seal. Thereby, it is possible to use more of the available surface space at the seal later side for connecting the limiter to the seal. Thereby, the connection strength can be increased.

According to a further preferred embodiment, the seal may comprise two sealing parts and a connecting part, which connects the two sealing parts. The at least one limiter may be provided in the connecting part. Therein, a seal width of the two sealing parts extending from one of the seal surface sides to the other seal surface side preferably may be larger than a limiter width extending from one of the limiter surface sides to the other limiter surface side. A limiter width extending from one of the limiter surface sides to the other limiter surface side may be larger than a seal width of the connecting part extending between opposite surface sides of the connecting part.

Therein, the term *"sealing part"* may be understood as a portion or section of the seal that is configured for contacting one of the seal counter-surfaces for sealing purposes. For instance, the two sealing parts may form a double seal.

With the above configuration, the limiter can be placed between two sealing parts so that the limiter can limit the compression of both sealing parts equally. Further, it can be ensured that the limiter can still contact both seal counter-surfaces directly without interfering with the sealing functionality of the two sealing parts. Thus, sealing reliability can be increased while maintaining the functionality of the limiter.

According to a preferred embodiment, the seal may comprise a sealing part and a connecting part, which protrudes laterally from the sealing part. The at least one limiter may be mechanically connected to the seal lateral side, which extends at the connecting part. Preferably, the at least one limiter may be only mechanically connected to the connecting part of the seal. Furthermore, the at least one limiter may extend parallel to the seal along a longitudinal direction that is transverse to the width direction. Preferably, a seal width of the sealing part extending from one of the seal surface sides to the other seal surface side may be larger than a limiter width extending from one of the limiter surface sides to the other limiter surface side. A limiter width extending from one of the limiter surface sides to the other limiter surface side may be larger than a seal width of the connecting part extending from one surface side to the opposite other surface side. Further preferred, the at least one limiter may be positioned on an outside of the seal.

Thereby, the limiter can be provided at a lateral distance from the sealing part, which allows to place the limiter in areas of the electrolyser cell with the highest compression force. Thus, the functionality of the limiter can be improved. Said configuration also allows to place the limiter outside the sealed zone within the electrolyser cell. Thus, the limiter can be kept away from corrosive substances inside the sealed area of the electrolyser cell.

According to a further preferred embodiment, the seal may comprise a mounting part for attaching the seal to the membrane electrode assembly. The mounting part may be provided laterally of the seal surface sides. Preferably, the mounting part may project in a direction transverse to the width direction. More preferred, the mounting part may comprise a slit opening. Therein, the slit opening may be adapted to receive and seal a section of the membrane electrode assembly against either of the bipolar plates. The slit opening can be provided in an extension of the sealing part material that is overmolded or edge bonded to the MEA.

Thereby, two separate sealing zones inside the electrolyser cell can be provided with a single sealing device. Furthermore, exact positioning of the seal relative to the MEA and the BPP can be achieved. Accordingly, assembly of an electrolyser cell with such configuration of the sealing device can be simplified and improved. Further, the limiter can also limit the compression of the MEA as the limiter is provided laterally of the MEA and thus, is able to transfer forces in the width direction without directing them through the MEA.

A further aspect of the invention relates to an electrolyser cell for a solid polymer electrolyte electrolyser cell stack. The electrolyser cell comprises a membrane electrode assembly for electrolysis of water. Therein, the membrane electrode assembly comprises two porous transport layers, an anode, a cathode and a catalyst coated membrane. Further, the electrolyser cell comprises two bipolar plates for transporting current and substances to and from the membrane electrode assembly. The electrolyser cell further comprises at least one above-described sealing device for sealing the membrane electrode assembly of the electrolyser cell against at least one of the bipolar plates of the electrolyser cell.

With the sealing device, the compression of the entire electrolyser cell can be limited. The sealing device can further act as a stiffener and provide structural strength to the electrolyser cell. In particular, the thickness of the limiter device will determine the maximum compression set the seal and the MEA is or are allowed.

Preferably, the MEA comprises a catalyst coated membrane (CCM). Alternatively, the catalyst could be provided on the PTL and/or a GDL. The CCM may have a polymer membrane for exchange of ions between its two opposite membrane sides. Therein, the term *"ion"* may be understood as an atom or molecule with a positive or negative electric charge. For instance, the ion may be a cation (e.g. proton, H+) or an anion (e.g. hydroxide, OH-). The polymer membrane is permeable for ions and may form a barrier to certain substances, such as gases like oxygen or hydrogen. Additionally, the membrane is electrically isolating. The CCM may be a proton exchange membrane (PEM) or an anion exchange membrane (AEM). Further, the CCM member comprises a catalyst coating, which is receptive to electrons and forms an electrode on each side. The electrodes may be an anode and a cathode. The anode may be the water side, where water is supplied as reactant and oxidized to oxygen, protons, and electrons. The cathode may be the hydrogen side, where supplied electrons and protons, which travelled through the polymer membrane, are combined to form hydrogen. The term *"porous transport layer (PTL)"* may be understood as a structure for distributing and/or collecting reactants or by-products across the surface of the electrodes and for the removal of fluid by-products from the electrodes. The PTL may be a gas distribution layer. The PTLs may be made from a porous material and may be electrically conductive. The PTLs may be made of a metal-based material, such as titanium or coated titanium, for instance, if used on electrodes with high electric potential. In comparison, for lower potentials, PTLs comprising carbon may be used.

According to a preferred embodiment, the at least one sealing device may be mechanically connected to one of the PTLs. For instance, a section of the one PTL may be attached to the mounting part of the seal. Therein, preferably the at least one sealing device may seal simultaneously both of the BPPs against the MEA.

Thereby, the compression of the MEA can be also limited by the limiter. In particular, the compression set (creep) can be advantageously reduced since the PTL is one the main contributors of compression set in the MEA. As a consequence, the performance of the electrolyser cell can be improved since the PTL's ability to transport water and gas will be undiminished since a collapse of its pores under over-compression can be avoided and thus, any negative impact on the performance of the electrolyser cell due to the collapse can be avoided. In addition, the assembly of the electrolyser cell and the sealing device is easier when the sealing device is already mechanically connected to the PTL.

According to a further preferred embodiment, the MEA may comprise a frame connected to the CCM and the at least one sealing device may be mechanically connected to the frame. For instance, a section of the frame may be attached to the mounting part of the seal. Therein, the at least one sealing device may seal simultaneously both of the BPPs against the MEA.

Therein, the term *"frame"* may be understood as a rigid structure for holding the MEA in position and providing sufficient mechanical support for an electrolysis process.

Thereby, also the compression of the MEA can be limited by the limiter. Furthermore, the assembly of the electrolyser cell and the sealing device is easier when the sealing device is already mechanically connected to the frame.

According to a preferred embodiment, each of the BPPs may comprise a seal groove, in which the sealing device may be arranged, respectively. Therein, preferably each of the sealing devices may seal one of the BPPs separately against the MEA.

Thereby, it is possible for the limiter to act as a stiffener to the entire MEA by providing overall structural strength, which allows also for easier handling during the assembly process.

A further aspect of the present invention relates to a solid polymer electrolyte electrolyser cell stack, which comprises a series stack of a plurality of the above-described electrolyser cells.

Thereby, the same advantages and effects can be achieved as described already above for the electrolyser cell.

A further aspect of the present invention relates to a use of the above-described electrolyser cell or of the above-described solid polymer electrolyte electrolyser cell stack for the electrolysis of water, respectively.

Thereby, electrolysis of water can be done reliably and with reduced compression set.

These and other aspects of the invention are evident upon reference to the attached Figures and following detailed description.
- **Figure 1**: shows a schematic view of a section through an electrolyser cell according to an embodiment of the invention.
- **Figure 2**: shows a schematic perspective view of a sealing device according to an embodiment of the invention.
- **Figures 2A, 2B**: show a schematic view of a section through the sealing device of Fig. 2 along lines Ila and IIb.
- **Figure 3**: shows a schematic top view of an electrolyser cell according to an embodiment of the invention.
- **Figures 3A, 3B**: show a schematic view of a section through the electrolyser cell of Fig. 3 along lines IIIa and IIIb.
- **Figure 4**: shows a schematic top view of an electrolyser cell according to another embodiment of the invention with a similar configuration of the sealing device shown in Figure 2.
- **Figures 4A, 4B**: show a schematic view of a section through the electrolyser cell of Fig. 4 along lines IVa and IVb.
- **Figure 5**: shows a schematic top view of an electrolyser cell according to another embodiment of the invention with a similar configuration of the sealing device shown in Figure 2.
- **Figures 5A, 5B**: show a schematic view of a section through the electrolyser cell of Fig. 5 along lines Va and Vb.
- **Figure 6**: shows a schematic perspective view of a sealing device according to another embodiment of the invention.
- **Figures 6A**: shows a schematic view of a section through the sealing device of Fig. 6 along line VIa.
- **Figure 7**: shows a schematic top view of an electrolyser cell according to an embodiment of the invention with a similar configuration of the sealing device shown in Figure 6.
- **Figures 7A, 7B**: show a schematic view of a section through the electrolyser cell of Fig. 7 along lines VIIa and VIIb.
- **Figure 8**: shows a schematic top view of an electrolyser cell according to another embodiment of the invention with a similar configuration of the sealing device shown in Figure 6.
- **Figures 8A, 8B**: show a schematic view of a section through the electrolyser cell of Fig. 8 along lines VIIIa and VIIIb.
- **Figure 9**: shows a schematic top view of an electrolyser cell according to another embodiment of the invention with a similar configuration of the sealing device shown in Figure 6.
- **Figures 9A, 9B**: show a schematic view of a section through the electrolyser cell of Fig. 9 along lines IXa and IXb.
- **Figure 10**: shows a schematic perspective view of a sealing device according to another embodiment of the invention.
- **Figures 10A**: shows a schematic view of a section through the sealing device of Fig. 10 along line Xa.
- **Figure 11**: shows a schematic top view of an electrolyser cell according to another embodiment of the invention with a similar configuration of the sealing device shown in Figure 10.
- **Figure 11A**: shows a schematic view of a section through the electrolyser cell of Fig. 11 along lines XIa and XIb.
- **Figure 12**: shows a schematic top view of an electrolyser cell according to another embodiment of the invention with a similar configuration of the sealing device shown in Figure 10.
- **Figure 12A**: shows a schematic view of a section through the electrolyser cell of Fig. 12 along lines XIIa and XIIb.
- **Figure 13**: shows a schematic top view of an electrolyser cell according to another embodiment of the invention with a similar configuration of the sealing device shown in Figure 10.
- **Figure 13A**: shows a schematic view of a section through the electrolyser cell of Fig. 13 along lines XIIIa and XIIIb.

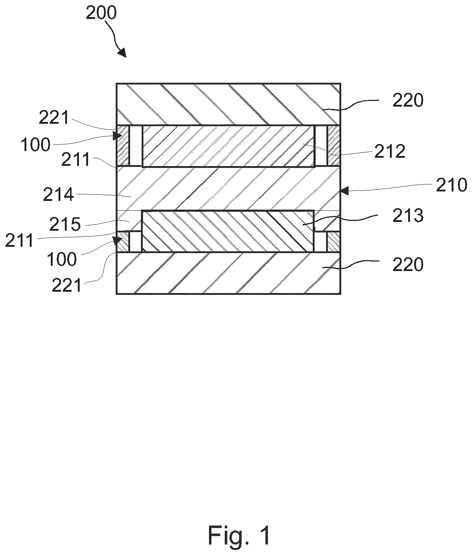

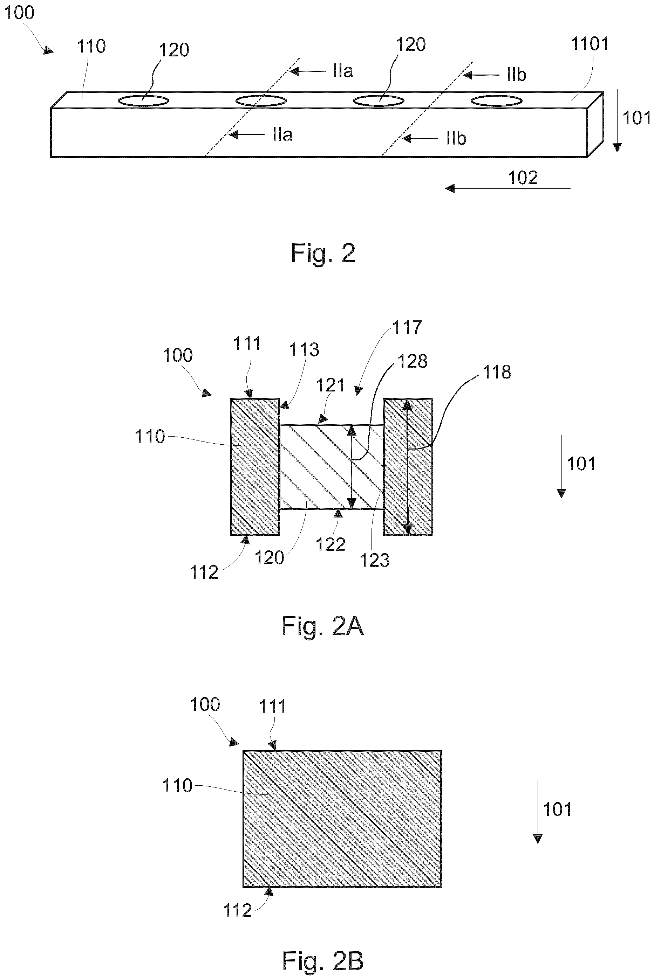

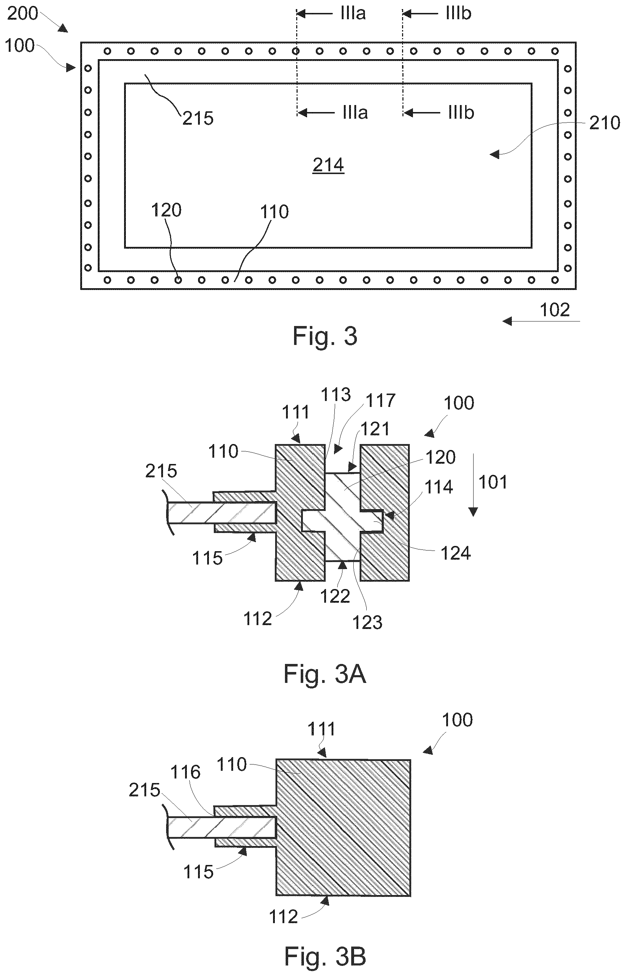

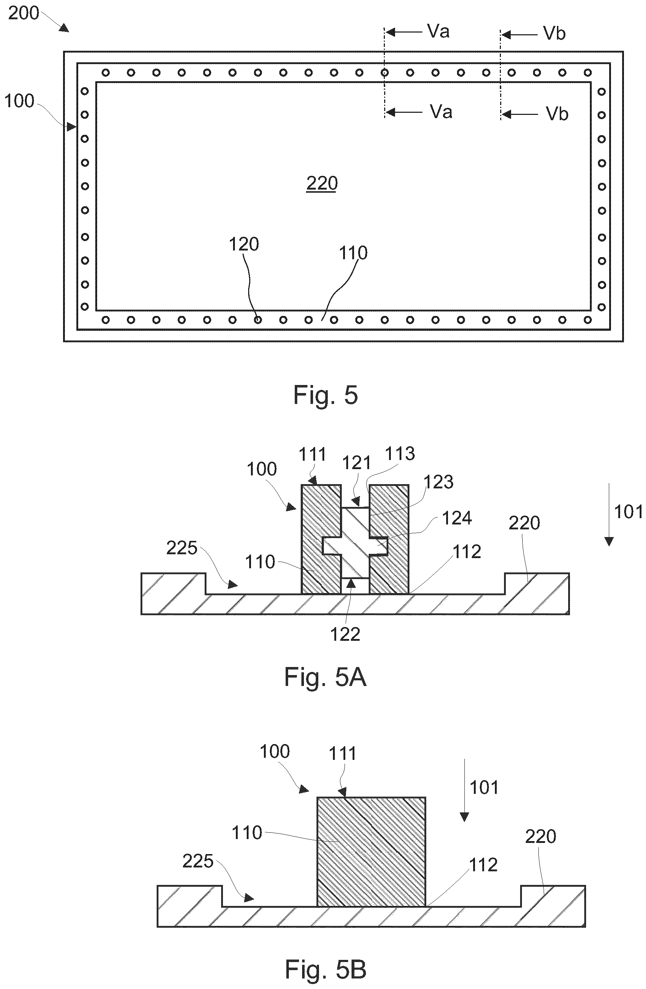

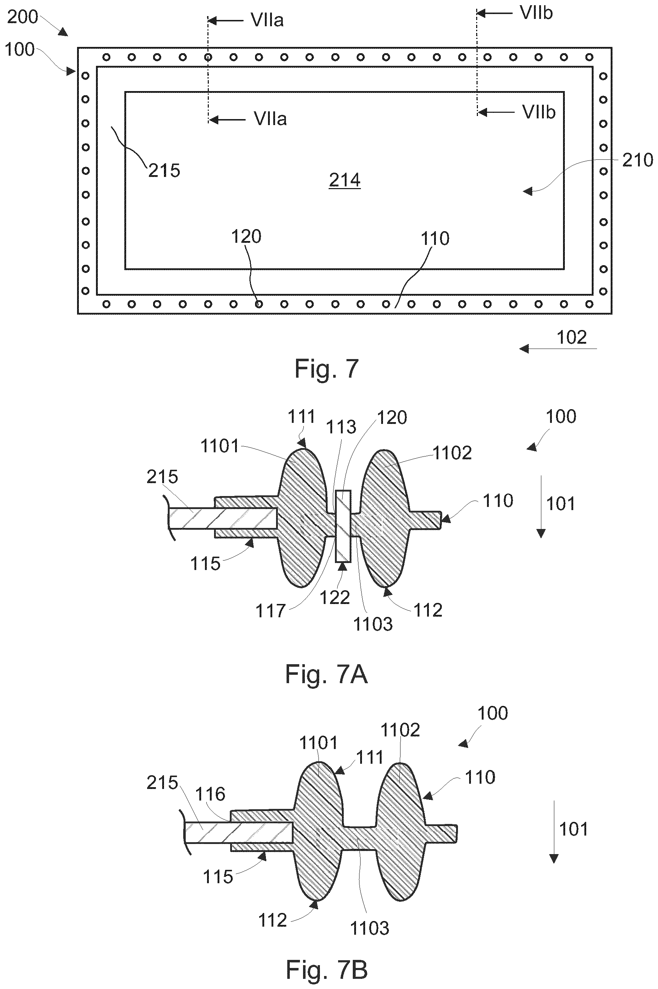

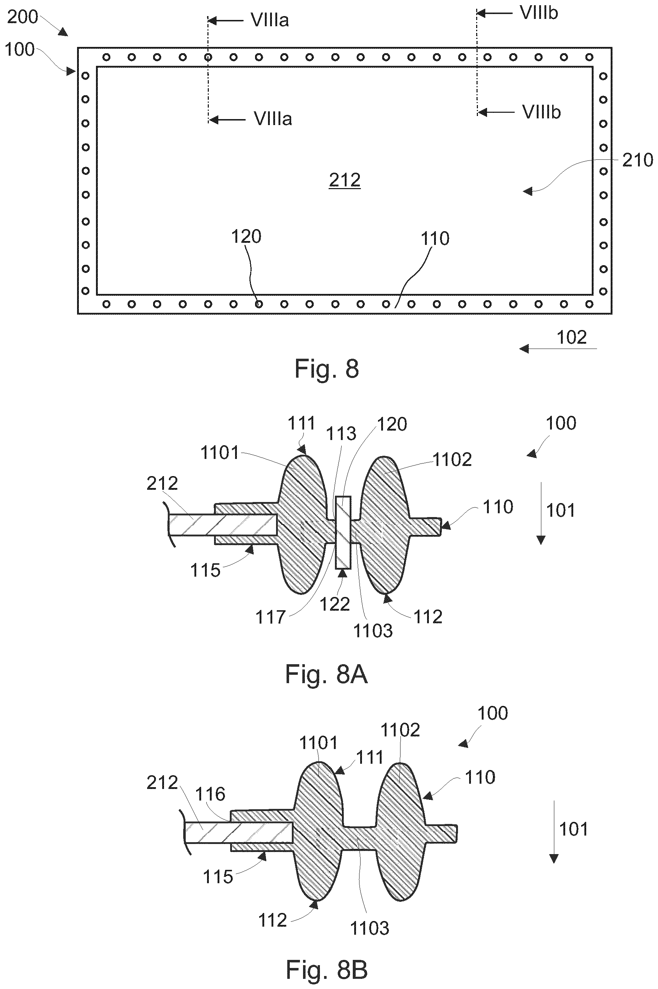

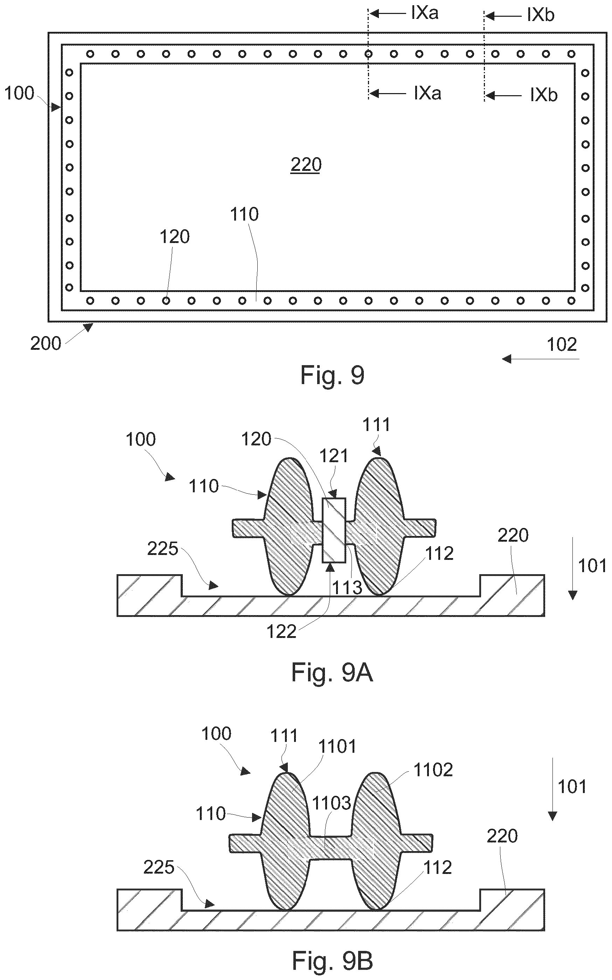

The figures show different views of different aspects and embodiments of the present invention. Figures 2, 6 and 10 show different embodiments of a sealing device 100 for an electrolyser cell of the invention. Figure 1 shows an embodiment of an electrolyser cell 200 of the invention. Figures 3 to 5, 7 to 9 and 11 to 13 show further embodiments of the electrolyser cell 200 of the invention with various embodiments of the sealing device 100.

Figure 1 shows a cross-sectional view of an embodiment of the electrolyser cell 200 of the invention. The electrolyser cell 200 comprises a MEA 210 with an anode and cathode on either side of a CCM 214. The CCM 214 comprises a solid polymer electrolyte that separates the contents of anode and cathode compartments, conducts protons, and prevents electrons from passing from the anode to the cathode. The electrolyser cell 200 is configured for electrolysis of water, whereby water is split into hydrogen and oxygen by using electricity. The electrolyser cell 200 comprises two PTLs 212, 213 for guiding said substances to and from the CCM 214. Therein, the anode may be supplied with water as reactant, which is oxidized to oxygen, protons, and electrons. The cathode may be supplied with electrons and protons, which travelled through the polymer membrane and combine to form hydrogen. The MEA 210 may comprise a frame 215 to provide mechanical support to the CCM 214. Two bipolar plates 220 are provided on either of the PTLs 212, 213 for transporting current and substances to and from the MEA 210. The electrolyser cell 200 further comprises at least one sealing device. The sealing device 100 is configured for sealing two or more components of the electrolyser cell 200 against each other. Figure 1 shows two sealing devices 100 seal the MEA 210 against the BPPs 220, respectively.

Figures 2 to 13 show the sealing device 100 in more detail. Therein, it is shown that the sealing device 100 comprises a seal 110. The seal 110 is made of a sealing material, such as an elastomer. Therein, the seal 110 may be configured to withstand high pressures (up to for example 100 bar) existing in the anode and/or cathode compartments. The seal 110 is provided for sealing two opposite seal counter-surfaces 211, 221 of components of the electrolyser cell 200 against each other, for instance by closing gaps between the seal counter-surfaces 211, 221, which are a result of surface irregularities. In Figure 1, the seal counter-surfaces 211, 221 have been shown exemplarily for a surface of the BPP 220 and a surface of the CCM 214 or the frame 215. For contacting the seal counter-surfaces 211, 221 for sealing, the seal 110 comprises two opposite seal surface sides 111, 112.

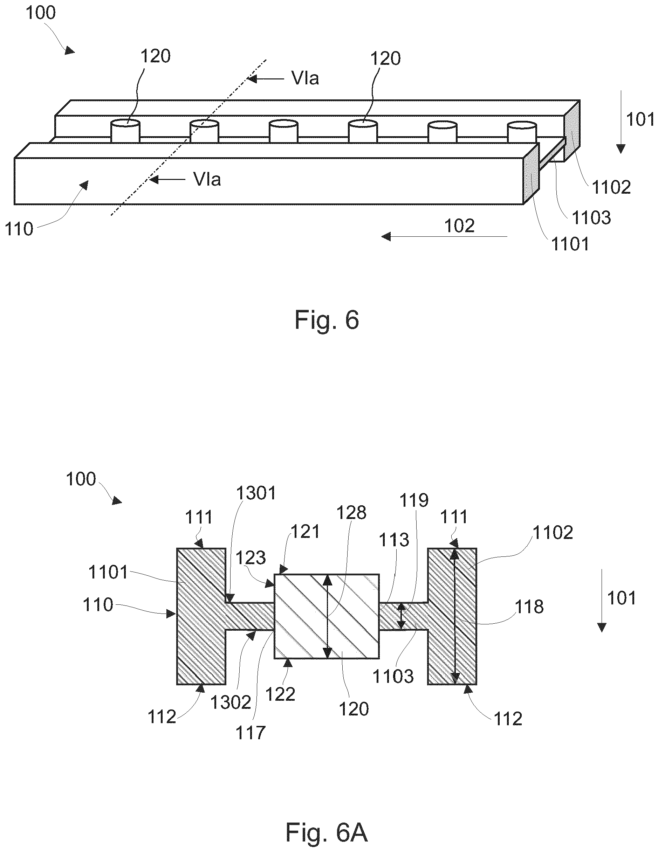

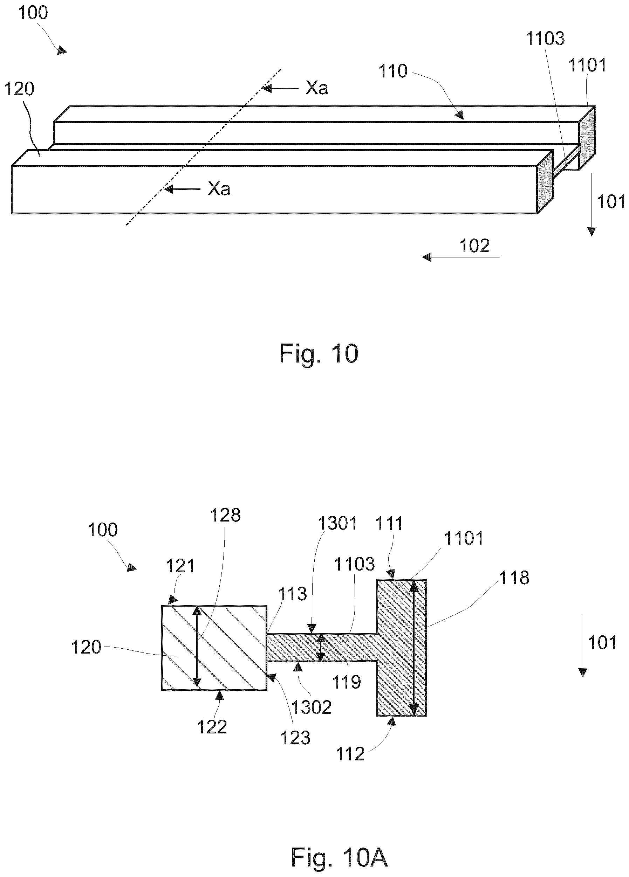

The seal 110 extends in a width direction 101 between the seal surface sides 111, 112. Therein, the seal 110 may comprise a constant cross-sectional profile, with which the seal 110 may extend along a longitudinal direction 102 that is transversely to the width direction 101. The longitudinal direction 102 may correspond with a circumferential direction, and thus, can vary along the longitudinal extension of the seal 110. The seal 110 may have various cross-sectional profiles. For instance, the cross-sectional profile may have a square or rectangular shape, such as in Figures 2 to 5. It may have the shape of an H (Figures 6 to 9) or T (Figures 10 to 13), whereby also elliptical shapes can be used to form sections of the cross-sectional profile. The seal profile is not limited to the stated examples and of course other geometries or combinations of geometries are possible. The seal 110 may be a window seal. The seal 110 may be configured to extend along a perimeter of the MEA 210. The seal 110 may have a closed profile in a top view along the width direction 101. This is exemplarily illustrated in Figures 3 to 5, 7 to 9, and 11 to 13.

The seal 110 may be provided as a single seal, such as shown in Figures 2 and 10, or the seal 110 may be provided as a double seal, such as shown in Figure 6. For instance, the seal 110 in Figures 2 and 10 comprises a single sealing part 1101, which comprises the two sealing surfaces 111, 112. The seal 110 of Figure 10 further comprises a connecting part 1103 that extends laterally of the sealing surfaces 111, 112 and longitudinally with the sealing part 1101. In comparison, in Figure 6, the seal 110 comprises two sealing parts 1101, 1102, which are connected by the connecting part 1103. Therein, each of the two sealing parts 1101, 1102 comprises the two sealing surfaces 111, 112. Naturally, the seal 110 may comprise also more than just two sealing parts. The connecting part 1103 and the sealing parts 1101, 1102 may be made of the same seal material and/or may be monolithically or integrally connected.

The seal 110 further comprises a seal lateral side 113, which is provided laterally of the seal surface sides 111, 112. Thus, the seal lateral side 113 may be any surface that extends laterally of the seal surface sides 111, 112 and thus, may be a side defined by a surface that extends in at least in the width direction 101. Various examples for the seal lateral side 113 exist. For example, in Figure 10, the seal lateral side 113 extends along the longitudinal direction 102 and the width direction 101 at a distal end of the connecting part 1103 of the seal 110. In Figure 2, the seal 110 comprises multiple openings 117, which extend each between the seal surface sides 111, 112. The surface of the seal 110 surrounding the openings 117 can form at least part of the seal lateral side 113. Similarly, in Figure 6, multiple openings 117 are provided in the seal 110, or more specifically, in the connecting part 1103. Here each of the openings 117 extends between two opposite connecting part surface sides 1301, 1302. As for Figure 2, the surface of the seal 110 surrounding the openings 117 can form at least part of the seal lateral side 113.

The sealing device 100 further comprises at least one limiter 120 for limiting a compression of the seal 110 in the width direction 101. For this, the limiter 120 comprises two opposite limiter surface sides 121, 122 for engaging the limiter 120 with the seal counter-surfaces 211, 221. Laterally of the limiter surface sides 121, 122, the limiter 120 comprises a limiter lateral side 123. The limiter 120 is exemplarily illustrated in Figures 2 to 13.

Figures 2 to 9 also show examples of the sealing device 100, where multiple of the limiters 120 are arranged at equal intervals in the longitudinal direction 102 within the seal 110. Figures 10 to 13 show examples of the sealing device 100, where only one limiter 120 is provided that extends all along with the seal 110.

The limiter 120 may be provided as a solid structure. The limiter 120 may have a cylindrical or cuboid shape, which extends in the width direction 110 along its longitudinal axis. The limiter 120 may be made of a mechanically incompressible material, in particular in comparison to the MEA 210 or to the seal 110. Preferably, the material of the material that allows only isochoric or volume-preserving motions under stresses typically existing in the electrolyser cell 200 or in an electrolyser cell stack. Further, the limiter 120 may be made of a different material than the seal 110.

The limiter 120 is physically connected to the seal 110 via a mechanical connection between the limiter lateral side 123 and the seal lateral side 113. This is exemplarily shown in Figures 2 to 13. 5.From these, it can be taken that the mechanical connection can be established in various ways.

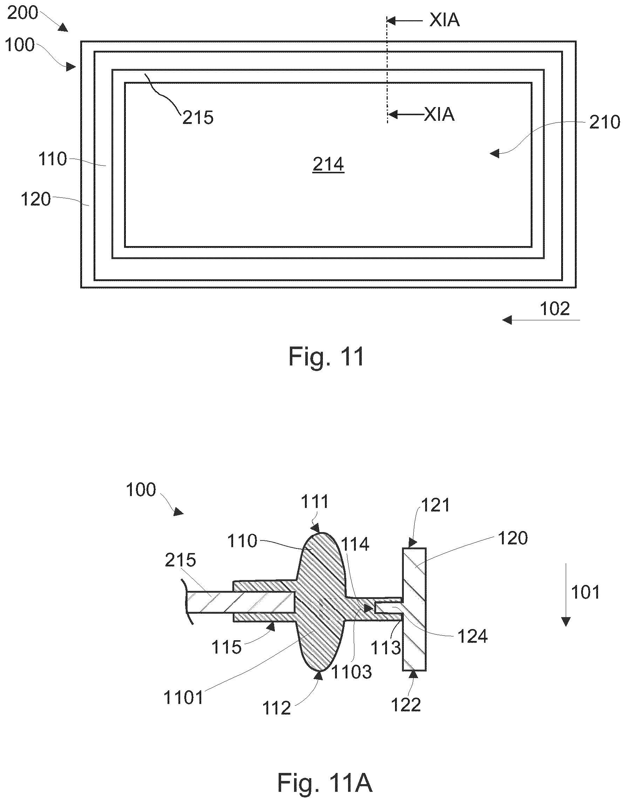

For example, the mechanical connection between the limiter lateral side 123 and the seal lateral side 113 may provide a form-fit connection. For this, the limiter 120 may comprise a locking element 124 and the seal 110 may comprise a corresponding counter-locking element 114, which, through form-locking engagement, establish a mechanical link between the two components. In Figures 3 to 5, the locking element 124 is provided as a flange protruding laterally from the limiter lateral side 123. The counter-locking element 114 is provided in the seal 110 by a corresponding circumferential groove provided at the seal lateral side 113. In Figures 11 to 13, the locking element 124 is provided as a protruding portion that overhangs the limiter lateral side 123. The counter-locking element 114 is provided in the seal 110 by a complementary groove in the seal lateral side 113. Preferably, the locking element 124 (e.g. the flange) may have a larger extension width than the counter-locking element 114 (e.g. the groove) to additionally establish a force-fit connection and/or friction-fit connection.

Alternatively or additionally, the mechanical connection between the limiter lateral side 123 and the seal lateral side 113 may be a force-fit connection and/or friction-fit connection. This is exemplarily illustrated in Figures 2 and 6 to 9. In these examples, the limiter 120 may be provided in the opening 117 with the limiter lateral side 123 facing and contacting the seal lateral side 113. The limiter 120 and the opening 117 have at least partially complementary cross-sectional profiles that allow for the two components to establish a friction-fit connection.

Alternatively or additionally, the mechanical connection between the limiter lateral side 123 and the seal lateral side 113 may be an adhesive bond between the seal 110 and the at least one limiter 120. This is exemplarily illustrated in Figure 10.

The limiter 120 may be placed within or outside of the seal 110. For example, in Figures to 5, the limiter 120 is provided within the seal part 1101. In Figures 6 to 9, the limiter 120 is provided in the connecting part 1103. In Figures 10 to 13, the limiter 120 is provided at a lateral end of the connecting 1103 that is distal to the sealing part 1102.

The limiter 120 may have a limiter width 128 between the limiter surface sides 121, 122 that is smaller than a seal width 118 between the seal surface sides 111, 112. This is exemplarily illustrated in all Figures. If the seal 110 comprises a connecting part 1103, such as shown in Figures 6 to 13, the limiter width 128 may be larger than a connecting part width 119 of the connecting part 1103 between its two opposite connecting part surface sides 1301, 1302. The connecting part width 119 may be smaller than the seal width 128.

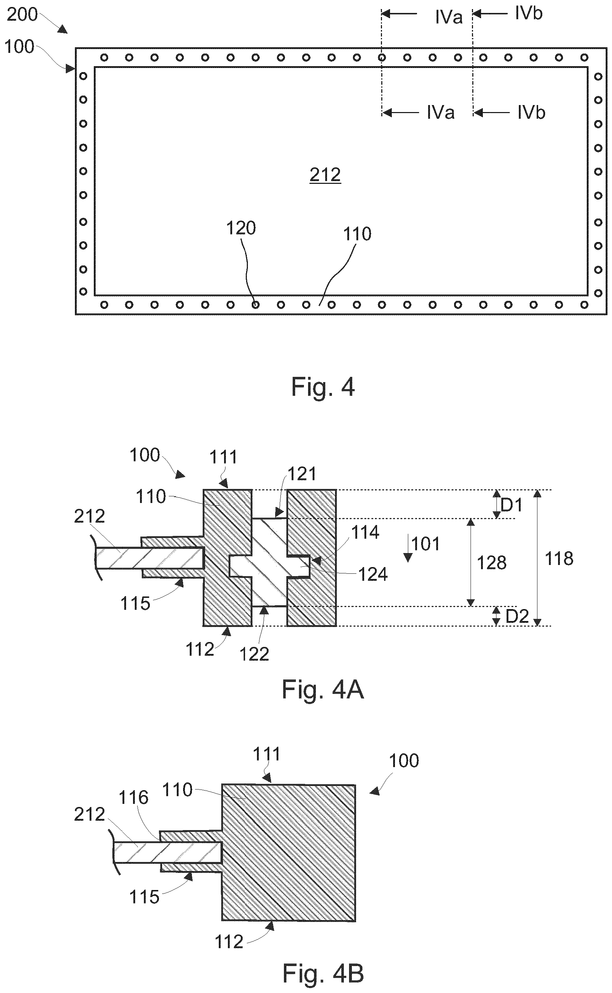

The limiter 120 may be arranged in different position with respect to the seal 110. For example, Figure 4A illustrates exemplarily that the limiter 120 may extend in the width direction 101 between the seal surface sides 111, 112 so that there is a distance D1 in the width direction 101 between the limiter surface side 121 and the seal surface side 111. The limiter 120 may also extend in the width direction 101 between the seal surface sides 111, 112 so that there is a distance D2 between the other limiter surface side 122 and the other seal surface side 112. It is conceivable that one of the distances D1, D2 is zero. Furthermore, the distances D1, D2 may be the same or different, such as exemplarily illustrated in Figure 4A. Therein, it is possible to use the position of the locking element 124 and the counter-locking element 114 to set the respective distances D1, D2.

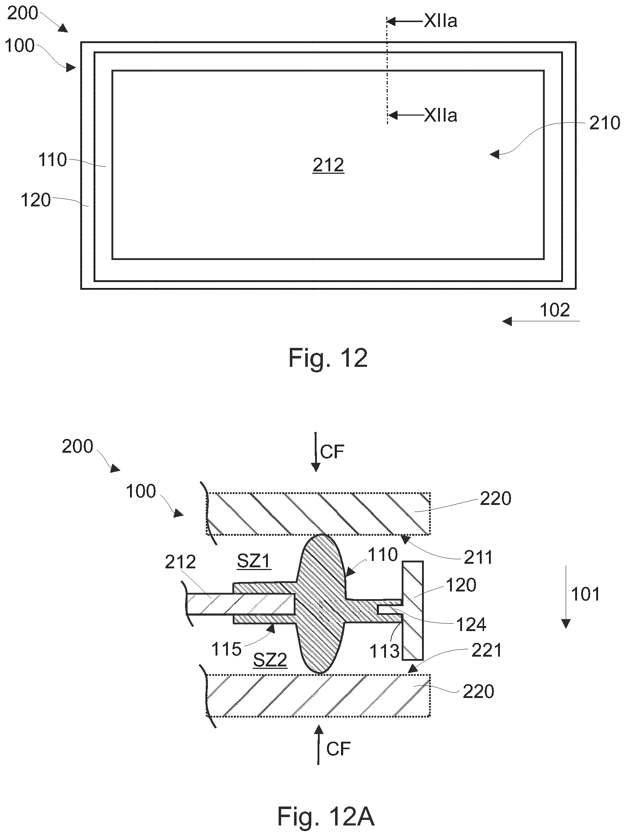

For attaching the seal 110 to the membrane electrode assembly 210, the seal 110 may comprise a mounting part 115. The mounting part 115 is exemplarily illustrated in Figures 3, 4, 7, 8, 11 and 12. The mounting part 115 may be provided laterally of the seal surface sides 111, 112 and project in a direction transverse to the width direction 101 and the longitudinal direction 102. A groove or slit opening 116 may be provided in the mounting part 115 adapted to receive and seal a section of the MEA 210. Figure 12A illustrates further advantages of the provision of the mounting part 115 at the sealing device 100. Therein, the respective part of the MEA 210 may be adhered or anchored to the mounting part 115. From Figure 12A, it can be taken that two separate sealing zones SZ1, SZ2 can be provided inside the electrolyser cell 200 with a single sealing device 100. Each sealing zone SZ1, SZ2 may correspond with an anode compartment or a cathode compartment. Opposing compression forces CF may be applied to both BPPs 220 and the seal 110 may be compressed until the seal counter-surfaces 211, 221 of the BPPs 220 come into contact with the limiter surface sides 121, 122. After this, the seal 110 will not undergo any further compression regardless of an amplification of the compression forces CF.

The mounting part 115 may be used in configurations of the electrolyser cell 200, where the sealing device 100 may be mechanically connected to one of the PTLs 212, 213 (as shown in Figures 4, 8, 12), or to the frame 215 of the MEA 210 (as shown in Figures 3, 7, 11). As such, the sealing device 100 may also form and function as part of the mechanical support of the MEA 210 in the electrolyser cell 200.

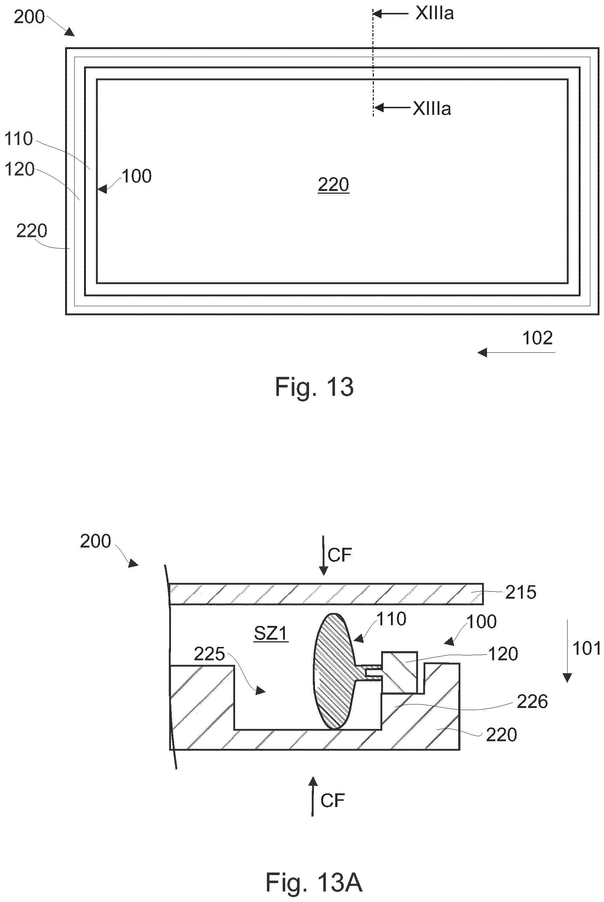

Alternatively, the electrolyser cell 200 may be provided with two sealing devices, such as exemplarily illustrated in Figure 1. Therein, the sealing devices 100 may be arranged each in a seal groove 225 of the BPPs 220 so that each sealing device 100 seals one of the BPPs 220 separately against the MEA 210. As such, the sealing device 100 may be provided as a loose gasket that can be simply placed between the respective components. This is exemplarily illustrated in Figures 1, 5, 9 and 13. In particular, Figure 13A shows exemplarily how sealing of the BPP 220 against the frame 215 can be achieved with the sealing device 100. Therein, the limiter 120 may be placed at a seal groove step 226 to limit the compression applied through compression forces CF. Consequently, a sealed zone SZ1 is established, which may correspond with an anode compartment or a cathode compartment.

The invention is not limited by the embodiments as described hereinabove, as long as being covered by the appended claims. All features of the embodiments described hereinabove can be combined in any possible way and be provided interchangeably.

**Reference signs**

| | |
|---|---|
| sealing device | 100 |
| width direction | 101 |
| longitudinal direction | 102 |
| seal | 110 |
| sealing parts | 1101, 1102 |
| connecting part | 1103 |
| connecting part surface sides | 1301, 1302 |
| seal surface sides | 111, 112 |
| seal lateral side | 113 |
| counter-locking element | 114 |
| mounting part | 115 |
| slit opening | 116 |
| opening | 117 |
| seal width | 118 |
| connecting part width | 119 |
| limiter | 120 |
| limiter surface sides | 121, 122 |
| limiter lateral side | 123 |
| locking element | 124 |
| limiter width | 128 |
| electrolyser cell | 200 |
| membrane electrode assembly, MEA | 210 |
| seal counter-surfaces | 211, 221 |
| porous transport layer, PTL | 212, 213 |
| catalyst coated membrane, CCM | 214 |
| frame | 215 |
| bipolar plate, BPP | 220 |
| seal groove | 225 |
| seal groove step | 226 |
| compression force | CF |
| distance | D1, D2 |
| sealed zones | SZ1, SZ2 |

## Claims

1. Sealing device (100) for sealing a membrane electrode assembly (210) of an electrolyser cell (200) against at least one bipolar plate (220) of the electrolyser cell (200), comprising:
a seal (110), extending in a width direction (101) between two opposite seal surface sides (111, 112) for sealing against respective seal counter-surfaces (211, 221) of the electrolyser cell (200), and further comprising a seal lateral side (113), which is provided laterally of the seal surface sides (111, 112), and
at least one limiter (120) for limiting a compression of the seal (110) in the width direction (101) by engaging two opposite limiter surface sides (121, 122) of the limiter (120) with the seal counter-surfaces (211, 221), further comprising a limiter lateral side (123), which is provided laterally of the limiter surface sides (121, 122),
**characterized in that**
at least a part of the limiter lateral side (123) is mechanically connected to at least a part of the seal lateral side (113).

2. Sealing device (100) according to claim 1, **characterized in that** a limiter width (128) extending from one limiter surface side (121) to the other limiter surface side (122) is smaller than a seal width (118) extending from one seal surface side (111) to the other seal surface side (112).

3. Sealing device (100) according to claim 2, **characterized in that** the at least one limiter (120) is arranged with respect to the seal (110) to extend in the width direction (101) between the seal surface sides (111, 112), wherein preferably a distance (D1) in the width direction (101) between the limiter surface side (121, 122) and the seal surface side (111) on one side of the sealing device (100) in the width direction (101), is the same or different as a distance (D2) between the other limiter surface side (121) and the other seal surface side (111) on the opposite side of the sealing device (100).

4. Sealing device (100) according to any of the preceding claims, **characterized in that** the at least one limiter (120) is made of a different material than the seal (110), and/or the at least one limiter (120) is made of a material that is less compressible than the material of the seal (110), wherein preferably the seal (110) comprises an elastomer and the at least one limiter (120) comprises a non-conductive solid.

5. Sealing device (100) according to any of the preceding claims, **characterized in that** the mechanical connection between the limiter lateral side (123) and the seal lateral side (113) is provided as a form-fit connection, force-fit connection, friction-fit connection, and/or an adhesive bond between the seal (110) and the at least one limiter (120).

6. Sealing device (100) according to any of the preceding claims, **characterized in that** the at least one limiter (120) comprises a locking element (124), which is provided at the limiter lateral side (123), for locking the limiter (120) relatively to the seal (110) by engaging the locking element (124) with a corresponding counter-locking element (114) of the seal (110), which is provided at the seal lateral side (113).

7. Sealing device (100) according to any of the preceding claims, **characterized in that** the seal (110) comprises an opening (117), which extends between the two opposite seal surface sides (111, 112) and which forms at least part of the seal lateral side (113), wherein the at least one limiter (120) is provided in the opening (117) with the limiter lateral side (123) facing or contacting the seal lateral side (113), wherein preferably the at least one limiter (120) and the opening (117) have complementary cross-sectional profiles for establishing a friction-fit connection.

8. Sealing device (100) according to any of the preceding claims, **characterized in that** the sealing device (100) comprises several limiters (120) and the several limiters (120) are provided within the seal (110) at equal intervals in a longitudinal direction (102) transversely to the width direction (101).

9. Sealing device (100) according to any of the preceding claims, **characterized in that** the seal (110) comprises two sealing parts (1101, 1102) and a connecting part (1103), which connects the two sealing parts (1101, 1102), and the at least one limiter (120) is provided in the connecting part (1103).

10. Sealing device (100) according to any of claims 1 to 8, **characterized in that** the seal (110) comprises a sealing part (1101) and a connecting part (1103), which protrudes laterally from the sealing part (1101), and the at least one limiter (120) is mechanically connected to the seal lateral side (113), which extends at the connecting part (1103).

11. Sealing device (100) according to any of the preceding claims, **characterized in that** the seal (110) comprises a mounting part (115) for attaching the seal (110) to the membrane electrode assembly (210), wherein the mounting part (115) is provided laterally of the seal surface sides (111, 112), wherein the mounting part (115) projects in a direction transverse to the width direction (101) and comprises a slit opening (116) adapted to receive and seal a section of the membrane electrode assembly (210) against either of the bipolar plates (220).

12. Electrolyser cell (200) for a solid polymer electrolyte electrolyser cell stack, comprising
a membrane electrode assembly (210) for electrolysis of water, comprising two porous transport layers (212, 213), an anode, a cathode and a catalyst coated membrane (214) or a catalyst coated porous transport layer (212, 213), and
two bipolar plates (220) for transporting current and substances to and from the membrane electrode assembly (210),
**characterized by**
at least one sealing device (100) according to any of claims 1 to 11 for sealing the membrane electrode assembly (210) of the electrolyser cell (200) against at least one of the bipolar plates (220) of the electrolyser cell (200).

13. Electrolyser cell (200) according to claim 12, **characterized in that** the at least one sealing device (100) is mechanically connected to one of the porous transport layers (212, 213), wherein preferably a section of the one porous transport layer (212, 213) is attached to the mounting part (115) of the seal (110), wherein preferably the at least one sealing device (100) seals both of the bipolar plates (220) against the membrane electrode assembly (210).

14. Electrolyser cell (200) according to claim 12, **characterized in that** the membrane electrode assembly (210) comprises a frame (215) connected to the catalyst coated membrane or membrane (214), wherein the at least one sealing device (100) is mechanically connected to the frame (215), wherein preferably a section of the frame (215) is attached to the mounting part (115) of the seal (110), wherein preferably the at least one sealing device (100) seals both of the bipolar plates (220) against the membrane electrode assembly (210).

15. Electrolyser cell (200) according to claim 12, **characterized in that** each of the bipolar plates (220) comprises a seal groove (225), in which the sealing device (100) is arranged, respectively, wherein preferably each of the sealing devices (100) seals one of the bipolar plates (220) separately against the membrane electrode assembly (210).
